# EUROPEAN PATENT SPECIFICATION

(11) **EP 0 268 338 B1**
(45) Date of publication and mention of the grant of the patent: **24.02.1993**
(21) Application number: 87202210.8
(22) Date of filing: 13.11.1987
(51) Int. Cl.: B62J 6/00

(54) **A light system for a vehicle, in particular a bicycle**
Beleuchtungssystem für Fahrzeuge, insbesondere für ein Fahrrad
Système d'éclairage pour véhicule en particulier pour bicyclette

(30) Priority: 14.11.1986 DK 5443/86
(43) Date of publication of application: 25.05.1988
(73) Proprietor: Larsen, Herluf Jakob, DK-6100 Haderslev (DK)
(72) Inventor: Larsen, Herluf Jakob, DK-6100 Haderslev (DK)
(74) Representative: Gregersen, Niels Henrik Aarhus Patentkontor

(56) References cited:
- CH-A- 166 638
- DE-A- 3 036 243
- DE-A- 3 440 304
- DE-C- 812 229
- DK-A- 59 790
- DK-A- 64 966
- FR-A- 2 276 980

## Description

The present invention relates to a light system for a bicycle comprising a lamp, a battery and a circuit with control and contact means for automatically switch on and off, respectively, said lamp dependent on surrounding light conditions as said circuit comprises a light sensor for switching on the lamp when the ambient light level falls below a certain value.

A similar system is disclosed in DE-A-3 036 243. This known system uses both a dynamo and a battery for activating the light device of the bicycle. The object of this system is to automatically switch on the rear light when the light sensor is illuminated by another vehicle and also to switch to the battery when the dynamo is not active, for example when the bicycle stops at a trafic light in the dark.

However, a drawback of the system is that the battery must be replaced at regular times. Usually, this is forgotten or done too late. Moreover, it is very expensive to replace the battery time and again.

To overcome this drawback CH-A-116638 proposes a system wherein the battery has been replaced by a rechargeable battery which is to be charged by means of the bicycle dynamo.

DE-A-3 440 304 discloses a lighting circuit for a bicycle in which a rear light is caused to blink when the ambient light falls between predetermined levels
Theoretically these systems have excellent function; however, in practice they appear to be less good which in particular may be ascribed to inappropriate and expensive constructions which furthermore are often unstable in use. Besides such a solution of combination has the very same main disadvantage as the ordinary dynamo lamp, viz. that it influences the driving pleasure of the cyclist by procuring a tough and continuous braking effect - in particular - if the dybnamo is not properly maintained.

In practice therefor many cyclists prefer to use loose battery lamps being mounted at the front and at the rear end of the bicycles by means of suitable holding members. However, loose bicycle battery lamps which by the way are rather expensive have more clear disadvantages in use. First of all people have to remember to bring along the bicycle lamps which normally are not to be left on the bicycle due to extensive theft. Unfortunately loose battery lamps of good quality are often heavy as well as bulky for which reason many cyclists nevertheless choose to let the lamps be on the bicycle when this is left alone in public places. This of course is inappropriate because it causes many cases of theft of loose bicycle lamps. However, more adverse is the fact that many cyclists having get the bicycle lamps stolen very often nevertheless choose to ride their bicycles without light in the lighting-up time which seen from a road safety point of view is very adversely.

The object of the invention is to meet these drawbacks. According to the invention this object can be achieved in that said battery is a rechargeable battery and said light sensor is adapted to permanent activate the light when the ambient light level falls below a certain value, and that said control means furthermore comprise sensor means being adapted to register that the bicycle is in use and to switch on the lamp only if the light sensor is also activated.

Hereby it may in a simple manner be obtained important advantages in use which in particular is of great importance concerning the necessary capacity of the rechargeable battery and the automatical function of the light system gets a new dimension in use by the introduction of the new parameter - that the bicycle has to be in normal use in order to switch on the lamps of the light system.

Appropriately said sensor means may consist of a magnetical operable induction sensor being build in in the crank of the bicycle, said induction sensor being adapted to cooperate with a preferably permanent magnet placed on the crank axle of the bicycle as said induction sensor being connected with contact means cooperating with contact means controlled by said light sensor.

Or said sensor means may consist of a sound sensitive vibration sensor being build in in the crank of the the bicycle, said vibration sensor being connected with contact means cooperating with contact means controlled by said light sensor.

Alternatively, there may in connection with the crank of the bicycle be mounted as well said sound sensitive vibration sensor as said magnetical opperable induction sensor with said magnet, said sensors being controlably connected with common contact means.

In most cases it would be preferred that said sensor being build in in the crank housing consist of said induction sensor; but in certain cases, e.g. if the crank housing is made of plastic, it would be most appropriate to make use of said vibration sensor. The induction sensor distinguish itself by being not able to activate by incidental bumps on the bicycle, i.e. that the light system may not be switch on unintentionally in a dark bicycle shed by incidental bump affection of the bicycle.

Most advantageously the rechargeable battery may be mounted in a tubeshaped housing being adapted to be positioned inside a frame tube portion of the bicycle, preferably in the saddle tube thereof, as said saddle tube is connected with the crank housing of the bicycle.

However, it would be indeed advantageously that the whole light system with exception of said lamps and connecting wires and maybe said magnet as a unit being mounted in a tubular housing being adapted to be positioned inside the saddle tube of the bicycle, said saddle tube being provided with side openings for said light sensor and for a contact terminal being adapted to connect the rechargeable battery with an extern charge unit as an opening to the crank housing being made in the bottom of the saddle tube.

From the crank housing of the bicycle the connecting wires to said lamps may chiefly be lead inside the frame of the bicycle why a front lamp with special advantage may be adapted to mount directly on a crown tube of the bicycle.

The invention is described in more details in the following, reference being made to the accompanying drawing, in which:-
Fig. 1 is a side view of a bicycle frame in which is build in an embodiment of a ligh system according to the invention,
Fig. 2 shows another embodiment of a light system according to the invention,
Fig. 3 shows an electric circuit for the light system shown in Fig. 2, while
Fig. 4 shows a simplified electric circuit for the light system according to the invention - shown in Fig. 1.

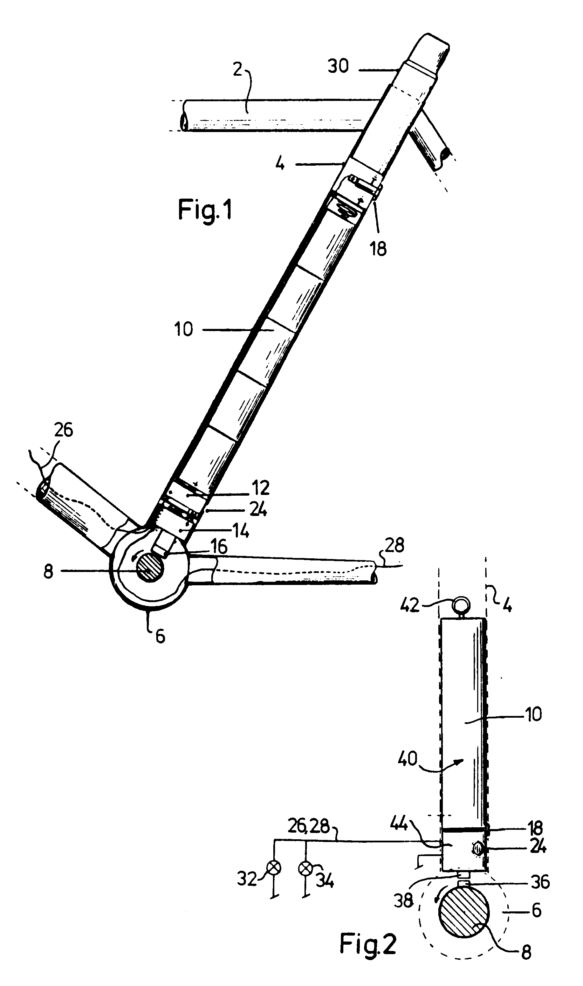

The light system according to the invention - as shown in Fig. 1 - is adapted to build in in a bicycle frame 2, more specific in a saddle tube 4 which at the bottom is connected with a crank housing 6 with a crank axle 8. The light system consist of a set of rechargeable batteries 10, a photo censor 12, a delay relay (circuit) 14 and a vibration sensitive contact member 16 as these parts are connected by way of example as shown in Fig. 4. On top of the rechargeable batteries 10 is mounted a plug outlet 18 for a socalled jack plug 20 by means of which the light system may be connected with an external charge unit 22 (Fig.4) which e.g. as known per see may be build together with a mains plug. The photo sensor (cell) 12 is positioned in front of an opening 24 in the saddle tube 4 so that the photo cell 12 including a socalled blue filter may register the surrounding light condition without being too sensitive, i.e. without being influenced of strong artificial light influences e.g. from passing cars. Preferably the photo cell 12 is only influenced by ultra-violet ligh with a light intensity of 1-2 lux. From the saddle tube 4 and via the crank housing 6 the front and rear lamps of the bicycle are connected by means of connecting wires 26 and 28 which in a sense may comprise one or two conductors dependent of the light system works with a common earth (frame) connection.

The light system according to Figs. 1 and 4 has an autimatical function in the following manner:
When the bicycle is in use, i.e. when the crank axle 8 is rotated and when the photo cell 12 register suiteable little light the front and rear lamps of the bicycle are aotomatically swithed on and the light is not switched off until after a certain delay period of about ½-1 minute. Correspondingly the vibration sensitive contact member 16 may be adjusted to give signal when more succeeding vibrations are registered so that incidental bumps against the bicycle, e.g. in a dark bicycle shed, may not switch on the light system. With other words the light system aotomatically switch on the lamps of the bicycle when the bicycle is in use and when light is required on the bicycle. In shorter periodes of silent e.g. by being standing at traffic signals the bicycle lamps remain switched on as the light system comprise a delay relay which only after a longer periode of silent switch off the bicycle lamps. Normally a delay periode of ½ - 1 minute may be suiteable. The vibration sensitive contact member 16 is activated of the rolling vibrations in the crank housing 6 and in its bearings; but the contact member 16 is connected in series with the photo cell 12 (Fig. 4), i.e. both the vibration sensitive contact member 16 and the photo cell 12 have to be activated to switch on the lamps while the contact member 16 and the photo cell 12 separately may influence the light system to switch off the bicycle lamps as the vibration sensitive contact member 16 yet only after a certain periode of silent determined of the delay relay 14, which is connected in parallel with the vibration sensitive contact member 16, may influence the light system to switch off the lamps. The whole ligth system is build together in a unit being adapted to be positioned in the saddle tube 4 under a saddle post 30 as the wires 26 and 28 from the saddle tube 4 via the crank housing are lead through the other frame tubes of the bicycle frame to a front lamp 32 and to a rear lamp 34, respectively (Fig. 4).

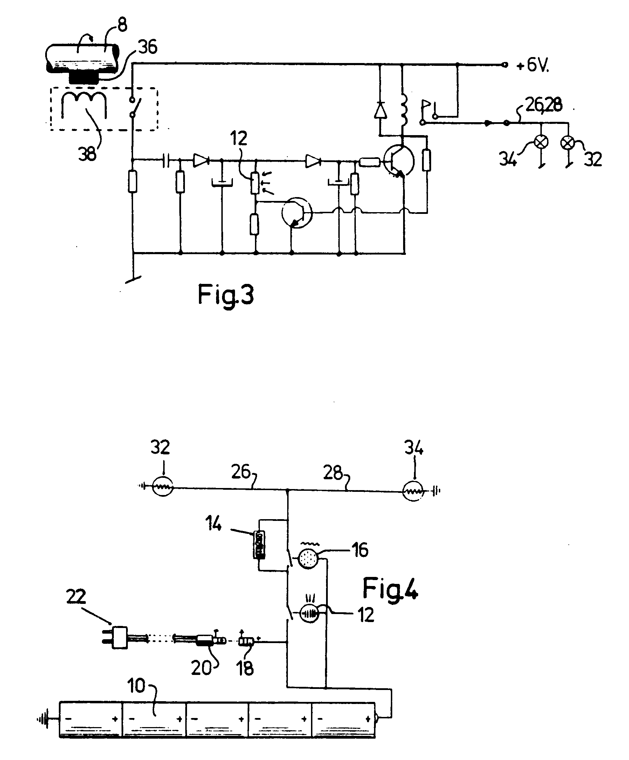

In an other embodiment for the light system according to the invention the crank axle 8 cf. Figs. 2 and 3 is provided with a permanent magnet 36 which is secured by glue to the crank axle 8. The rotation of this is registered by means of a magnetic pick-up 38 which as shown in Fig.3 is a part of the electronic constrolling circuit of the light system and which fysically is positioned in the top of the crank housing 4 which for this purpose has an opening to a suiteable frame tube such as the saddle tube 4 in which the light system is preferably build in as an assembled unit (Fig.2), i.e. that the light system is encapsulated in a tubular casing 40 which by means of an upper carrying eye 42 may be lowered and taken up, respectively, from the saddle tube 4 by means of a suitable auxiliary tool as the casing 40 is adapted to be fixed into the saddle tube 4 by means of a pointed screw. The casing 40 comprises a lower part 44 in which photo cell or photo resistor and the other electronic including the magnetic pick-up 38 are build in as the photo risistor is placed in front of a side opening 24 in the saddle tube 4 which furthermore is provided with an opening for a jack-plug 18 for connecting the light system with an external recharge unit.

When the crank axle 8 is rotating current impulses are generated and electic voltage is build up over the exit (Fig.3) for switching on the lamps 32 and 34 of the bicycle. However, a photo risistor registering the light intensity counteracts this when the light intensity correspond to day light. By decreasing light intensity this blockade is removed and the lamps of the bicycle are switched on. A hysteresis part of the circuit (Fig. 3) prevents that minor fluctuations in the light intensity influences the controlling of the light system when the lamps are only switched on. On the other hand the lamps are automatically switched off if the crank axle 8 is not rotated for more than about 1 minute.

## Claims

1. A light system for a bicycle comprising a lamp (32,34), a battery (10) and a circuit with control and contact means for automatically switch on and off, respectively, said lamp (32,34) dependent on surrounding light conditions as said circuit comprises a light sensor (12) characterized in that said battery is a rechargeable battery (10), and said light sensor (12) is adapted to permanent activate the light when the ambient light level falls below a certain value, and that said control means furthermore comprise sensor means (16,38) being adapted to register that the bicycle is in use and to switch on the lamp (32,34) only if the light sensor (12) is also activated.

2. A light system according to claim 1, characterized in that said sensor means consist of a magnetical operated induction sensor (38) which is build-in in the crank (6) of the bicycle, said induction sensor (38) being adapted to cooperate with a permanent magnet (36) placed on a crank axle (8) of the bicycle as the induction sensor (38) is connected with control means cooperating with contact means controlled by said light sensor (12).

3. A light system according to claim 1, characterized in that said sensor means consist of a sound sensitive vibration sensor (16) which is build-in in the crank (6) of the bicyle, said vibration sensor is connected with control means cooperating with contact means controlled by said light sensor (12).

4. A light system according to claims 1-3, characterized in that as well said sound sensitive vibration sensor (16) as said magnetical operable induction sensor (38) with said magnet (36) are mounted in connection with the crank (6) of the bicycle, said sensors (16,38) being controllably connected with common contact means.

5. A light system according to claims 1-4, characterized in that said rechargeable battery (10) is mounted in a tubular casing (40) which is adapted to be placed inside a frame tube part of the bicycle, preferably in the saddle tube (4) thereof, aid frame tube part being connected with the crank housing (6) of the bicycle.

6. A light system according to claims 1-5, characterized in that the whole light system with exeption of said lamps (32,34) and connection wires (26,28) and possible said magnet (36) as a unit being mounted in a tubular casing (44) being adapted to be placed inside the saddle tube (4) of the bicycle, said saddle tube (4) being provided with side openings for said light sensor (12) and for a contact terminal (18) being adapted to connect the rechargeable battery (10) with an external recharge unit as an opening to the crank housing (6) being made in the bottom of said saddle tube (4).

7. A light system according to claims 1-6, characterized in that a front lamp being adapted to be mounted directly on a crown tube portion of the bicycle.

## Patentansprüche

1. Lichtsystem für ein Fahrrad, bestehend aus einer Lampe (32, 34), einer Batterie (10) und einer Schaltung mit Steuer- und Kontaktmitteln zum automatischen An- und Abschalten der jeweiligen Lampe (32, 34), abhängig von den umgebenden Lichtbedingungen, da die Schaltung mit einem Lichtmeßfühler (12) ausgestattet ist, dadurch gekennzeichnet, daß die Batterie eine aufladbare Batterie (10) ist, und daß der Lichtmeßfühler (12) derart ausgebildet ist, daß er ständig das Licht einschaltet, wenn das Umlichtniveau unter einen bestimmten Wert sinkt und daß die Steuermittel (16,38) außerdem einen Meßfühler enthalten, der so ausgebildet ist, daß er erfaßt, wenn das Fahrrad in Gebrauch ist und die Lampe (32, 34) nur dann anschaltet, wenn der Lichtmeßfühler (12) ebenfalls angeregt ist.

2. Lichtsystem nach Anspruch 1, dadurch gekennzeichnet, daß der Meßfühler aus einem magnetisch betätigten Induktionsmeßfühler (38), der in die Kurbel (6) des Fahrrads eingebaut ist, besteht, wobei dieser Induktionsmeßfühler (38) so ausgebildet ist, daß er mit einem Permanentmagneten (36), der auf der Kurbelachswelle (8) des Fahrrads sitzt, zusammenarbeitet, da der Induktionsmeßfühler (38) mit Steuermitteln verbunden ist, die mit Kontaktmitfeln, die durch den Lichtsensor (12) gesteuert werden, zusammenarbeiten.

3. Lichtsystem nach Anspruch 1, dadurch gekennzeichnet, daß der Meßfühler aus einem geräuschempfindlichen Schwingungsmeßfühler (16) besteht, der in die Kurbel des Fahrrads eingebaut ist, wobei der Schwingungsmeßfühler mit den Steuermitteln verbunden ist, die mit den Kontaktmitteln, die durch den Lichtmeßfühler (12) gesteuert werden, zusammenarbeiten.

4. Lichtsystem nach den Ansprüchen 1 -3, dadurch gekennzeichnet, daß sowohl der geräuschempfindliche Schwingungsmeßfühler (16) als auch der magnetisch betätigbare Induktionsmeßfühler (38) mit dem Magneten (36) in Verbindung mit der Kurbel des Fahrrads eingebaut ist, wobei die Meßfühler (16, 38) mit gebräuchlichen Kontaktmitteln steuerbar verbunden sind.

5. Lichtsystem nach den Ansprüchen 1 - 4, dadurch gekennzeichnet, daß die aufladbare Batterie (10) in einem röhrenförmigen Gehäuse (40) angebracht ist, das so ausgebildet ist, daß es innerhalb eines Röhrenbereichs des Rahmens des Fahrrads eingebaut werden kann, vorzugsweise in dem Sattelrohr (4), wobei der Rahmenröhrenbereich mit dem Kurbelgehäuse (6) des Fahrrads verbunden ist.

6. Lichtsystem nach den Ansprüchen 1 - 5, dadurch gekennzeichnet, daß das gesamte Lichtsystem, mit Ausnahme der Lampen (32, 34) und der Verbindungsdrähte (26, 28) und dem möglichen Magneten (36) als Einheit in einem rohrenförmigen Gehäuse (44) eingebaut wird, das so ausgebildet ist, daß es innerhalb des Sattelrohrs (4) des Fahrrads angebracht werden kann, wobei die Sattelröhre (4) mit seitlichen Öffnungen für den Lichtmeßfühler (12) und für eine Polklemme (18) versehen ist, die so ausgebildet ist, daß sie die aufladbare Batterie (10) mit einer außen befindlichen Aufladeeinheit verbindet, wobei eine Öffnung zu dem Kurbelgehäuse (6) im Unterteil des Sattelrohrs (4) vorgesehen wurde.

7. Lichtsystem nach den Ansprüchen 1 - 6, dadurch gekennzeichnet, daß eine vordere Lampe so ausgebildet ist, daß sie direkt auf einem Deckröhrenteil des Fahrrads befestigt werden kann.

## Revendications

1. Système d'éclairage pour une bicyclette, comportant une lampe (32, 34), une batterie (10) et un circuit pourvu de moyens de commande et de contact pour allumer et éteindre automatiquement, respectivement, ladite lampe (32, 34) suivant les conditions d'éclairage ambiantes, car ledit circuit comporte un capteur (12) de lumière, caractérisé en ce que ladite batterie est une batterie rechargeable (10), et en ce que ledit capteur de lumière (12) est destiné à mettre en action permanente l'éclairage lorsque le niveau de lumière ambiante chute au-dessous d'une certaine valeur, et en ce que lesdits moyens de commande comprennent en outre des moyens capteurs (16, 38) destinés à enregistrer que la bicyclette est en cours d'utilisation et à allumer la lampe (32, 34) uniquement si le capteur (12) est également activé.

2. Système d'éclairage selon la revendication 1, caractérisé en ce que lesdits moyens capteurs comprennent un capteur (38) à induction actionné magnétiquement qui est incorporé dans le pédalier (6) de la bicyclette, ledit capteur (38) à induction étant destiné à coopérer avec un aimant permanent (36) placé sur un axe (8) de pédalier de la bicyclette car le capteur (38) à induction est connecté à des moyens de commande coopérant avec des moyens de contact commandés par ledit capteur (12) de lumière.

3. Système d'éclairage selon la revendication 1, caractérisé en ce que lesdits moyens capteurs comprennent un capteur (16) de vibrations sensible aux sons qui est incorporé dans le pédalier (6) de la bicyclette, ledit capteur de vibrations étant connecté à des moyens de commande coopérant avec des moyens de contact commandés par ledit capteur (12) de lumière.

4. Système d'éclairage selon les revendications 1 à 3, caractérisé en ce que ledit capteur (16) de vibrations sensible aux sons aussi bien que ledit capteur (38) à induction activé magnétiquement, avec ledit aimant (36), sont montés en association avec le pédalier (6) de la bicyclette, lesdits capteurs (16, 38) étant connectés de façon à pouvoir être commandés avec des moyens communs de contact.

5. Système d'éclairage selon les revendications 1 à 4, caractérisé en ce que ladite batterie rechargeable (10) est montée dans un boîtier tubulaire (40) qui est destiné à être placé à l'intérieur d'une partie de tube de cadre de la bicyclette, avantageusement dans le tube (4) de selle de celle-ci, ladite partie de tube du cadre étant reliée au corps (6) du pédalier de la bicyclette.

6. Système d'éclairage selon les revendications 1 à 5, caractérisé en ce que l'ensemble du système d'éclairage à l'exception desdites lampes (32, 34) et des fils de connexion (26, 28) et, peut-être, dudit aimant (36), est monté d'un seul bloc dans un boîtier tubulaire (44) destiné à être placé à l'intérieur du tube (4) de selle de la bicyclette, ledit tube (4) de selle étant pourvu d'ouvertures latérales pour ledit capteur (12) de lumière et pour une borne (18) de contact destinée à connecter la batterie rechargeable (10) à un chargeur extérieur du fait de la présence d'une ouverture vers le corps (6) de pédalier, réalisée au bas dudit tube (4) de selle.

7. Système d'éclairage selon les revendications 1 à 6, caractérisé en ce qu'une lampe avant est destinée à être montée directement sur une partie de tube supérieure de la bicyclette.
